# EUROPEAN PATENT SPECIFICATION

(11) **EP 2 646 756 B1**
(45) Date of publication and mention of the grant of the patent: **11.05.2016**
(21) Application number: 11794008.0
(22) Date of filing: 01.12.2011
(51) Int. Cl.: G05D 23/19, F24D 19/10

(54) **HEATING SYSTEM AND METHOD FOR HEATING A PLURALITY OF ROOMS**
HEIZSYSTEM UND VERFAHREN ZUM HEIZEN EINER VIELZAHL VON RÄUMEN
SYSTÈME DE CHAUFFAGE ET PROCÉDÉ DE CHAUFFAGE D'UNE PLURALITÉ DE PIÈCES

(30) Priority: 03.12.2010 DE 102010053209
(43) Date of publication of application: 09.10.2013
(73) Proprietor: Danfoss A/S, 6430 Nordborg (DK)
(72) Inventor: HESSELDAHL, Søren, DK-7182 Bredsten (DK); SØRENSEN, Bent, DK-7190 Billund (DK); GAMMELJORD, Peter, DK- 7100 Vejle (DK)
(74) Representative: Knoblauch, Andreas
(86) International application number: PCT/DK2011/000147
(87) International publication number: WO 2012/072080

(56) References cited:
- WO-A1-2005/098318
- DE-A1- 19 911 866

## Description

The invention relates to a heating system for heating a plurality of rooms, comprising a heat source, at least one heat exchanger in each room, said heat exchanger being connected to said heat source and being controlled by a control valve controlling a flow of heating fluid through said heat exchanger, a heat demand sensor for each room, and a control means controlling said control valves depending on the heat demand detected by said heat demand sensors, wherein the control means controls each control valve depending on the flow through at least one other control valve by controlling each control valve depending on the opening condition of at least one other control valve.

Furthermore, the invention relates to a method for heating a plurality of rooms by guiding a heating fluid from a heat source through a heat exchanger in each of said rooms wherein the flow of the heating fluid through each heat exchanger is controlled by a control valve depending on a heat demand of each room, wherein each control valve is actuated depending on the flow through at least one other control valve by being actuated depending on the opening condition of at least one other control valve.

Such a heating system and such a method are known from WO 2005/098318 A1 or DE 199 11 866 A1.

Most buildings comprise a plurality of rooms which are heated by means of a central heating system. Such a central heating system comprises a single heat source which supplies heating fluid to a plurality of heat exchangers wherein each heat exchanger is arranged in a room to be heated. Each heat exchanger should receive so much heating fluid that it heats the room to a predetermined temperature. The temperatures can differ between different rooms.

For this purpose, a temperature sensor (or any other sensor which can detect the heat demand) is arranged in each room and detects the actual temperature. The actual temperature is compared to a given temperature. Depending on the difference between these two temperatures or any other criterion for a heat demand, the control valve is more or less opened. When the control valve is opened, the flow of heating fluid flowing through the heat exchanger is increased leading to a rising temperature. When the control valve is closed, the flow of heating fluid flowing through the heat exchanger is reduced reducing the temperature of the room.

It is the task of the invention to heat rooms in an energy-saving manner.

This task is solved by a heating system mentioned above in that the control valves are on/off valves and the control means opens each control valve during a fraction of a predetermined time period, that fraction being determined by the heat demand detected by the heat demand sensors.

The control valves are no longer actuated independently from each other. They are controlled so that the flow of heating fluid through the heating system can be optimised. The optimisation takes into account the kind of heat source, for example whether the heat source is a boiler or burner which should be operated with a temperature as high as possible for a short period or whether the heat source is a heat pump which should be operated to obtain a uniform and low outlet over the time to get the highest possible efficiency. The flow through a control valve depends on the opening condition of the control valve. When the control valve is closed, there is no flow. Therefore, it is sufficient to control the opening of each control valve in dependency of the opening of other control valves or at least one other control valve. In other words, the control valves are operated by pulse width modulation (PWM). This means that each control valve is opened over a part of a predetermined time period only and closed over the remaining part of the time period. This is possible because most heat exchangers have a rather high time constant so that the temperature is sufficiently uniform.

Preferably, the control means controls the control valve according to at least one of the following modes of operation:
a) Opening all control valves at the same time once during said time period,
b) Opening a plurality of valves in a consecutive order during said time period,
c) Dividing said time period into a number of fractions, said number corresponding to the number of control valves of said plurality of control valves, each fraction being allocated to a specific control valve, opening a control valve at the beginning of its fraction provided that the control valve of the previous fraction is still open, or opening said control valve during the previous fraction at the time at which the control valve of the previous fraction is closed.

The first operation is used when the heat source is a burner or a boiler where a good combustion with high temperature and maximum output for a short period is essential. This ensures energy savings and less pollution. The other two operations are used for example in connection with heat pumps, where it is essential to obtain a uniform and low output to get the highest possible efficiency. In other words, the heating system is adapted to the heat source. Such source adaption provides as little on/off activity of the energy source as possible, which is important with regard to both energy consumption and wear.

Preferably, the control means comprises a selection input which is provided with information about the heat source. The selection input can be connected to the heat source. The heat source identifies itself for example as burner or heat pump. The control means can automatically chose the operation which is best suited for the heat source.

In a preferred embodiment the control means changes the output temperature of the heat source depending on the overall heat demand detected by all heat demand sensors. In this way it is possible to satisfy the heat demand of all rooms. When the heat demand increases, the output temperature of the heat source is raised. When the heat demand of all rooms becomes lower, the output temperature of the heat source will be changed to a lower value.

The task is solved in a method mentioned previously in that the control valves are on-off valves and the control means opens each valve during a fraction of a predetermined time period, said fraction being determined by the heat demand detected by a heat demand sensor for each room.

As outlined above in connection with the heating system it is possible to save energy by operating the valves depending on the kind of the heat source used. When a burner is used as heat source, it is advantageous to open all control valves simultaneously so that the burner can be operated with a good combustion. In this case, the temperature of the heating fluid is chosen so that the best combustion possible can be achieved, but the control valves are open only for a short period. When a heat pump is used as the heat source, it is essential to obtain a uniform temperature which should be as low as possible to get the highest possible efficiency. In this case the control valves are operated in a coordinated manner so that the flow of heating fluid through the heating system is as uniform as possible.

Preferably, the control valves are pulse width modulated. This is a simple way of enabling operation of the control valves in a coordinated manner.

Preferably, the control valves are controlled in one of the following modes of operation:
a) All control valves are opened simultaneously once during a predeter-mined time period,
b) All control valves are opened one after the other during such time period,
c) Said time period is divided into a number of fractions, said number of fractions corresponding to the number of control valves, each fraction being allocated to a specific control valve, opening a control valve at the beginning of its fraction provided that the control valve of the previous fraction is still open, or opening the control valve during the previous fraction at the time the control valve of the previous fraction is closed.

The first possibility is used when a burner or boiler is used since this operation causes a short flow of heating fluid in which the heating fluid has a temperature as high as possible. Therefore, the burner can be operated during a short time period with a rather high temperature. This ensures energy savings and less pollution. The other two possibilities can be used in connection with a heat pump. They ensure a flow of heating fluid through the system which is as uniform as possible. The heating fluid can be kept at a rather low temperature to get the highest possible efficiency.

Preferably the kind of operation is selected depending on the kind of the heat source. This selection can be made manually or automatically. The heating system can be adapted to the heat source.

Preferably, the output temperature of the heat source is changed depending on the heat demand of all rooms. When the heat demand becomes higher, the temperature is raised. When the heat demand becomes lower, the output temperature of the heat source is lowered.

Preferred embodiments of the invention will now be described in more detail with reference to the drawing, wherein
- Fig. 1: is a schematic representation of a heating system for three rooms,
- Fig. 2: is a principle sketch for a first mode of operation,
- Fig. 3: is a principle sketch for a second mode of operation,
- Fig. 4: is a sketch similar to that of Fig. 3 with a small modification,
- Fig. 5: is another representation of a further mode of operation and
- Fig. 6: is a further representation of another mode of operation.

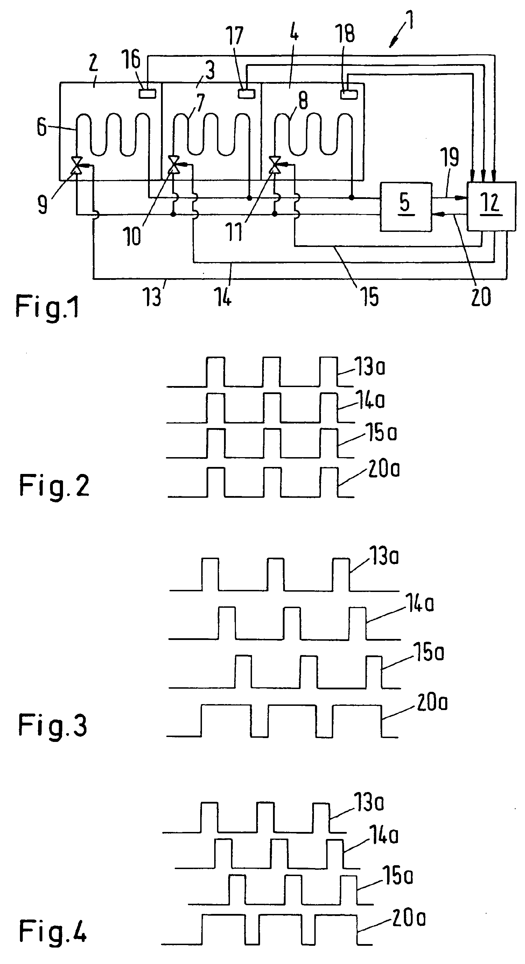

Fig. 1 shows schematically a heating system 1 for heating a plurality of rooms 2, 3, 4 in a building. The heating system comprises a heat source 5, outputting a heating fluid having an elevated temperature. Each room 2, 3, 4 is provided with a heat exchanger 6, 7, 8. In the present system, the heat exchangers 6, 7, 8 are in the form of floor heating lines. However, other types of heat exchangers can be used as well, e.g. radiators.

The flow of heating fluid through each heat exchanger 6, 7, 8 is controlled by means of a control valve 9, 10, 11. When the control valve 9, 10, 11 is opened, the flow of heating fluid passing through the respective heat exchanger 6, 7, 8 increases. When the control valve 9, 10, 11 closes, there is no flow of heating fluid. The control valves 9, 10, 11 are operated in pulse width modulation (PWM), i.e. they are opened over a part of a predetermined period. The length of the part determines the opening degree of the respective control valve 9, 10, 11. When a control valve 9, 10, 11 is open over the entire period, this control valve 9, 10, 11 has an opening degree of 100%. When the control valve 9, 10, 11 is opened over the half of the period, the opening degree is 50%. In case of a floor heating heat exchanger 6, 7, 8 the predetermined period can have a length of 15 minutes, 30 minutes, or 60 minutes.

All control valves 9, 10, 11 are controlled by a common control means 12 which is connected to the control valve 9, 10, 11 via control lines 13, 14, 15. The control lines 13, 14, 15 can be made as electrical or optical conductors or they can be wireless.

Each room 2, 3, 4 is provided with a temperature sensor 16, 17, 18. The temperature sensors 16, 17, 18 are connected to the control means 12 and supply temperature information to the control means 12. The temperature information is an information about a heat demand, so that the temperature sensors 16, 17, 18 can be regarded as heat demand sensors. Other kinds of heat demand sensors are possible. The temperature sensors 16, 17, 18 can be connected to the control means via physical lines or wireless.

The control means 12 is connected to the heat source 5 as well. Via one channel 19 the heat source 5 transmits an information about the kind of heat source 5. The control means 12 uses a second channel 20 in order to adjust the temperature of the heating fluid supplied by the heat source 5.

The control means 12 controls the control valves 9, 10, 11 such that a preset temperature for each room 2, 3, 4 is reached. The actual temperature detected by the temperature sensors 16, 17, 18 should coincide with the preset temperature.

Depending on the kind of the heat source 5 there are different modes of operation with which the control means 12 can work.

A first mode of operation is shown in Fig. 2. Fig. 2 shows schematic signals 13a, 14a, 15a which can be found on the control lines 13, 14, 15. When the signals 13a, 14a, 15a have a high level, the respective control valve 9, 10, 11 is opened. When the signals 13a, 14a, 15a have a low level, the control valves 9, 10, 11 are closed.

Furthermore, there is shown a signal 20a of channel 20. When the signal 20a has a high level, the heat source 5 is operated and heats the heating fluid.

This mode of operation is briefly called "pulse accumulation", i.e. all control valves 9, 10, 11 are opened at the same time and, in the present case, remain open for the same time period. This has the advantage that the heat source 5 operates with a maximum output for a short period. Such mode of operation is advantageous in particular in connection with a burner which burns oil or gas. A good combustion and therefore low pollution is achieved when the burner operates with a temperature as high as possible. When the control valves 9, 10,11 are controlled in a coordinated manner, so that they open and close simultaneously, the operation of the burner (heat source 5) can be concentrated to a period in which all control valves 9, 10, 11 are open.

Fig. 3 shows another mode of operation which is briefly called "pulse spreading".

Fig. 3 shows signals 13a, 14a, 15a on lines 13, 14, 15, respectively, showing an opening condition of the respective valve, when the signal has a high level. It can be seen that the valves 9, 10, 11 are opened in a consecutive order one after the other, i.e. when control valve 9 is opened, the control valve 10, 11 are closed. Control valve 10 (signal 14a) opens, when control valve 9 (signal 13a) closes. Control valve 11 opens, when control valve 10 closes. In this case, as shown with signal 20a on channel 20, the heat source 5 can be operated over a long fraction of each heating period. Such a mode of operation is advantageous for heat pumps, where it is essential to obtain a uniform output to get the highest possible efficiency. This uniform output can have a low temperature.

Fig. 4 shows a slightly modified example. The control valve 10 opens for a short instant before the control valve 9 closes (cf. signals 13a, 14a). In the same way control valve 11 (signal 15a) opens shortly before control valve 10 (signal 14a) closes. This is done because the control valve 9, 10, 11 need a certain time to fully open and close. As shown with signal 20a, the heat source 5 is operated over a rather long section or fraction of the time period. This kind of operation achieves the same advantages as that of Fig. 3.

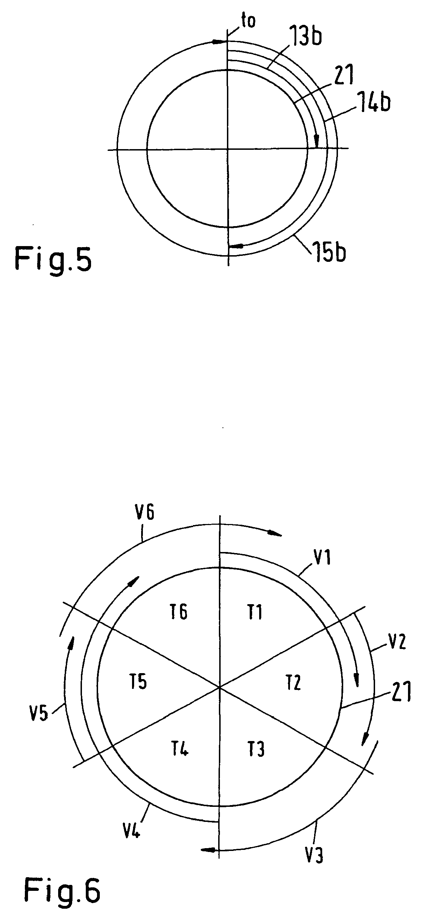

Fig. 5 shows a mode of operation similar to Fig. 2, i.e. "pulse accumulation". A circle 21 represents a time period. Such time period can have a length of 15, 30, or 60 minutes. At a time T0 all control valves 9, 10, 11 are opened. The time length of opening of each control valve is shown by means of a curved arrow 13b, 14b, 15b corresponding to signal on control lines 13, 14, 15.

It can be seen that control valve 9 which is controlled by signal 13b is open over a quarter of the period, control valve 10 which is controlled by signal 14b is opened half of the period, and control valve 11 which is controlled by signal 14c is opened over the whole period. The heat source 5 is operated in the first quarter of the period with maximum power, in the second quarter of the period with a reduced power and in the last half of the period with a further reduced power. Nevertheless, when using a burner or the like as a heat source 5, this achieves a good efficiency.

Fig. 6 shows a mode of operation according to the principle of "pulse spreading". In this case, there are six control valves. Therefore, the time period which is represented by the circle 21 is divided into 6 fractions T1, T2, T3, T4, T5, and T6. Each fraction of the time period is allocated to a control valve. The opening times are indicated by curved arrows V1, V2, V3, V4, V5, and V6.

It can easily be recognised that some of the opening times are longer than the respective fraction of the time period. This is true for control valves V1, V3, V4, and V6. The opening times for control valves V2 and V5 are shorter than the allocated fractions T2, T5 of the time period. This leads to the following mode of operation:

A control valve V1 is opened at the start or beginning of the fraction T1 of the period. The next control valve V2 in the order is opened or started at the beginning of the time fraction T2 of the period. Control valve V3 opens when control valve V2 is closed. Control valve V4 opens at the beginning of time faction T4. Control valve V5 opens at the beginning of time fraction T5. Control valve V6 opens when control valve V5 closes. In other words, control valves V1, V2, V4, V5 are opened at a time where the respective control valve V1, V3, V4 of the previous time Section T6, T1, T3, T4 is still open. In this case they open at the beginning of the fraction T1, T2, T4, T5 allocated to the respective control valve. When the control valve of the previous time fraction T2, T5 is closed within this respective time fraction, the following control valve V3, V6 is opened at the time, where the control valve V2, V5 in the preceding time fraction is closed.

This is another option to ensure a uniform operation of the heat source 5, e.g. a heat pump, which is a possibility to get the highest possible efficiency.

Besides being able to select if the energy source must supply energy in a uniform way, or as much as possible in the shortest possible time, the source adaption shown provides as little on/off activity of the heat source as possible, which is important with regard to both energy consumption and wear.

When the time in which a control valve 9, 10, 11 is open is not sufficient to deliver enough heat energy to the respective rooms 2, 3, 4, the desired temperature in each room 2, 3, 4 is not reached. This effect is detected by the temperature sensors 16, 17, 18. Based on this information, the control means 12 controls the heat source 5 in order to raise the temperature of the heating fluid.

If, on the other hand, the control valves 9, 10, 11 are opened only over a rather short fraction of the time period, this is an indication that the temperature of the heating fluid supplied by the heat source 5 is too high. This small opening degree is detected by the control means 12 which in this case lowers the temperature of the heating fluid supplied by the heat source 5.

## Claims

1. A heating system (1) for heating a plurality of rooms (2-4) comprising:
a heat source (5), at least one heat exchanger (6-8) in each room (2-4), said heat exchanger (6-8) being connected to said heat source (5) and being controlled by a control valve (9-11) controlling a flow of heating fluid through said heat exchanger, a heat demand sensor (16-18) for each room (2-4), and a control means (12) controlling said control valves (9-11) depending on the heat demand detected by said heat demand sensors (16-18), wherein the control means (12) controls each control valve (9-11) depending on the flow through at least one other control valve (9-11) by controlling each control valve (9-11) depending on the opening condition of at least one other control valve (9-11), **characterized in that** the control valves (9-11) are on-off-valves and the control means (12) opens each control valve (9-11) during a fraction of a predetermined time period, said fraction being determined by the heat demand detected by the heat demand sensors (16-18).

2. The heating system according to claim 1, **characterized in that** the control means (12) controls the control valves (9-11) according to at least one of the following modes of operation:
a) opening all control valves (9-11) at the same time,
b) opening a plurality of valves in a consecutive order during said time period,
c) dividing said time period into a number of fractions, said number corresponding to the number of control valves of said plurality of control valves, each fraction being allocated to a specific control valve, opening a control valve (V1, V2, V4, V5) at the beginning of its fraction (T1, T2, T4, T5) provided that the control valve (V6, V1, V3, V4) of the previous fraction (T6, T1, T3, T4) is still open, or opening said control valve (V3, V6) during the previous fraction (T2, T5) at the time at which the control valve (V2, V5) of the previous fraction (T2, T5) is closed.

3. The heating system according to claim 1 or 2, **characterized in that** the control means (12) comprises a selection input (19) which is provided with information about the heat source (5).

4. Heating system according to any of claims 1 to 3, **characterized in that** the control means (12) changes the output temperature of the heat source (5) depending on the overall heat demand detected by all heat demand sensors (16-18).

5. A method for heating a plurality of rooms (2-4) by guiding a heating fluid from a heat source (5) through a heat exchanger (6-8) in each of said rooms (2-4) wherein the flow of the heating fluid through each heat exchanger (6-8) is controlled by a control valve (9-11) depending on a heat demand of each room (2-4), wherein each control valve (9-11) is actuated depending on the flow through at least one other control valve (9-11) by being actuated depending on the opening condition of least one other control valve (9-11), **characterized in that** the control valves (9-11) are on-off valves and the control means (12) opens each control valve during a fraction of a predetermined time period, said fraction being determined by the heat demand detected by a heat demand sensor (16-18) for each room (2-4).

6. The method according to claim 5, **characterized in that** the control valves (9-11) are pulse width modulated.

7. The method according to claim 5 or 6, **characterized in that** the control valves are controlled in one of the following modes of operation:
a) all control valves are opened simultaneously once during a predetermined time period,
b) all control valves are opened one after the other during said time period,
c) said time period is divided in a number of fractions, said number of fractions corresponding to the number of control valves, each fraction being allocated to a specific control valve, opening a control valve at the beginning of its fraction provided that the control valve of the previous fraction is still open, or opening the control valve during the previous fraction at the time the control valve of the previous fraction is closed.

8. The method according to claim 7, **characterized in that** the mode of operation is selected depending on the kind of the heat source (5).

9. The method according to any of claims 5 to 8, **characterized in that** the output temperature of the heat source (5) is changed depending on the heat demand of all rooms (2-4).

## Patentansprüche

1. Heizsystem (1) zum Heizen mehrerer Räume (2-4), das Folgendes umfasst:
eine Wärmequelle (5), wenigstens einen Wärmetauscher (6-8) in jedem Raum (2-4), wobei der Wärmetauscher (6-8) mit der Wärmequelle (5) verbunden ist und durch ein Steuerventil (9-11), das einen Durchlauf von Heizfluid durch den Wärmetauscher steuert, gesteuert wird, einen Wärmebedarfssensor (16-18) für jeden Raum (2-4) und Steuermittel (12), die die Steuerventile (9-11) abhängig von dem Wärmebedarf, der durch die Wärmebedarfssensoren (16-18) detektiert wird, steuern, wobei die Steuermittel (12) jedes Steuerventil (9-11) abhängig von dem Durchlauf durch wenigstens ein weiteres Steuerventil (9-11) durch Steuern jedes Steuerventils (9-11) abhängig von dem Öffnungszustand des wenigstens einen weiteren Steuerventils (9-11) steuern, **dadurch gekennzeichnet, dass** die Steuerventile (9-11) Ein-Aus-Ventile sind und dass die Steuermittel (12) jedes Steuerventil (9-11) während eines Teils eines vorher festgelegten Zeitabschnitts öffnen, wobei der Teil durch den Wärmebedarf bestimmt wird, der durch die Wärmebedarfssensoren (16-18) detektiert wurde.

2. Heizsystem nach Anspruch 1, **dadurch gekennzeichnet, dass** die Steuermittel (12) die Steuerventile (9-11) in Übereinstimmung mit wenigstens einer der folgenden Betriebsarten steuern:
a) Öffnen aller Steuerventile (9-11) gleichzeitig,
b) Öffnen mehrerer Ventile hintereinander während des Zeitabschnitts,
c) Unterteilen des Zeitabschnitts in eine Anzahl von Teilen, wobei die Anzahl der Anzahl der Steuerventile der mehreren Steuerventile entspricht, wobei jeder Teil einem bestimmten Steuerventil zugeordnet ist, Öffnen eines Steuerventils (V1, V2, V4, V5) zu Beginn seines Teils (T1, T2, T4, T5), vorausgesetzt, dass das Steuerventil (V6, V1, V3, V4) des vorhergehenden Teils (T6, T1, T3, T4) noch offen ist, oder Öffnen des Steuerventils (V3, V6) während des vorhergehenden Teils (T2, T5) zu dem Zeitpunkt, zu dem das Steuerventil (V2, V5) des vorhergehenden Teils (T2, T5) geschlossen ist.

3. Heizsystem nach Anspruch 1 oder 2, **dadurch gekennzeichnet, dass** die Steuermittel (12) eine Auswahleingabe (19) umfassen, die mit Informationen bezüglich der Wärmequelle (5) versehen ist.

4. Heizsystem nach einem der Ansprüche 1 bis 3, **dadurch gekennzeichnet, dass** die Steuermittel (12) die Ausgangstemperatur der Wärmequelle (5) abhängig von dem Gesamtwärmebedarf, der durch alle Wärmebedarfssensoren (16-18) detektiert wird, ändern.

5. Verfahren zum Heizen mehrerer Räume (2-4) durch Leiten eines Heizfluids von einer Wärmequelle (5) durch einen Wärmetauscher (6-8) in jedem der Räume (2-4), wobei der Durchlauf des Heizfluids durch jeden Wärmetauscher (6-8) durch ein Steuerventil (9-11) abhängig von einem Wärmebedarf jedes Raums (2-4) gesteuert wird, wobei jedes Steuerventil (9-11) abhängig von dem Durchlauf durch wenigstens ein weiteres Steuerventil (9-11) betätigt wird, indem es abhängig von dem Öffnungszustand wenigstens eines weiteren Steuerventils (9-11) betätigt wird, **dadurch gekennzeichnet, dass** die Steuerventile (9-11) Ein-Aus-Ventile sind und dass die Steuermittel (12) jedes Steuerventil während eines Teils eines vorher festgelegten Zeitabschnitts öffnen, wobei der Teil durch den Wärmebedarf festgelegt wird, der durch die Wärmebedarfssensoren (16-18) für jeden Raum (2-4) detektiert wird.

6. Verfahren nach Anspruch 5, **dadurch gekennzeichnet, dass** die Steuerventile (9-11) pulsbreitenmoduliert sind.

7. Verfahren nach Anspruch 5 oder 6, **dadurch gekennzeichnet, dass** die Steuerventile in einer der folgenden Betriebsarten gesteuert werden:
a) alle Steuerventile sind während eines vorher festgelegten Zeitabschnitts gleichzeitig auf einmal geöffnet,
b) alle Steuerventile werden während des Zeitabschnitts der Reihe nach geöffnet,
c) der Zeitabschnitt wird in eine Anzahl von Teilen unterteilt, wobei die Anzahl der Teile der Anzahl der Steuerventile entspricht, wobei jeder Teil einem bestimmten Steuerventil zugeordnet ist, Öffnen eines Steuerventils zu Beginn seines Teils, vorausgesetzt, dass das Steuerventil des vorhergehenden Teils noch offen ist, oder Öffnen des Steuerventils während des vorhergehenden Teils zu dem Zeitpunkt, zu dem das Steuerventil des vorhergehenden Teils geschlossen ist.

8. Verfahren nach Anspruch 7, **dadurch gekennzeichnet, dass** die Betriebsart abhängig von der Art der Wärmequelle (5) ausgewählt wird.

9. Verfahren nach einem der Ansprüche 5 bis 8, **dadurch gekennzeichnet, dass** die Ausgangstemperatur der Wärmequelle (5) abhängig von dem Wärmebedarf aller Räume (2-4) geändert wird.

## Revendications

1. Système de chauffage (1) destiné à chauffer une pluralité de pièces (2-4) comprenant : une source de chaleur (5), au moins un échangeur de chaleur (6-8) dans chaque pièce (2-4), ledit échangeur de chaleur (6-8) étant relié à ladite source de chaleur (5) et étant contrôlé par une vanne de commande (9-11) contrôlant un écoulement de fluide de chauffage à travers ledit échangeur de chaleur, un capteur de demande de chaleur (16-18) pour chaque pièce (2-4), et un moyen de commande (12) contrôlant lesdites vannes de commande (9-11) en fonction de la demande de chaleur détectée par lesdits capteurs de demande de chaleur (16-18), le moyen de commande (12) contrôlant chaque vanne de commande (9-11) en fonction de l'écoulement à travers au moins une autre vanne de commande (9-11) en contrôlant chaque vanne de commande (9-11) en fonction de l'état d'ouverture d'au moins une autre vanne de commande (9-11), **caractérisé en ce que** les vannes de commande (9-11) sont des vannes tout ou rien et le moyen de commande (12) ouvre chaque vanne de commande (9-11) pendant une fraction d'un laps de temps prédéterminé, ladite fraction étant déterminée par la demande de chaleur détectée par les capteurs de demande de chaleur (16-18).

2. Système de chauffage selon la revendication 1, **caractérisé en ce que** le moyen de commande (12) contrôle les vannes de commande (9-11) selon au moins un des modes de fonctionnement suivants :
a) ouverture de toutes les vannes de commande (9-11) en même temps,
b) ouverture d'une pluralité de vannes dans un ordre consécutif pendant ledit laps de temps,
c) division dudit laps de temps en un nombre de fractions, ledit nombre correspondant au nombre de vannes de commande de ladite pluralité de vannes de commande, chaque fraction étant attribuée à une vanne de commande spécifique, ouverture d'une vanne de commande (V1, V2, V4, V5) au début de sa fraction (T1, T2, T4, T5) à condition que la vanne de commande (V6, V1, V3, V4) de la fraction précédente (T6, T1, T3, T4) soit encore ouverte, ou ouverture de ladite vanne de commande (V3, V6) pendant la fraction précédente (T2, T5) au moment où la vanne de commande (V2, V5) de la fraction précédente (T2, T5) est fermée.

3. Système de chauffage selon la revendication 1 ou 2, **caractérisé en ce que** le moyen de commande (12) comprend une entrée de sélection (19) qui est alimentée en informations sur la source de chaleur (5).

4. Système de chauffage selon l'une quelconque des revendications 1 à 3, **caractérisé en ce que** le moyen de commande (12) change la température de sortie de la source de chaleur (5) en fonction de la demande de chaleur globale détectée par tous les capteurs de demande de chaleur (16-18).

5. Procédé de chauffage d'une pluralité de pièces (2-4) par guidage d'un fluide de chauffage provenant d'une source de chaleur (5) à travers un échangeur de chaleur (6-8) dans chacune desdites pièces (2-4), l'écoulement du fluide de chauffage à travers chaque échangeur de chaleur (6-8) étant contrôlé par une vanne de commande (9-11) en fonction d'une demande de chaleur de chaque pièce (2-4), chaque vanne de commande (9-11) étant actionnée en fonction de l'écoulement à travers au moins une autre vanne de commande (9-11) en étant actionnée en fonction de l'état d'ouverture d'au moins une autre vanne de commande (9-11), **caractérisé en ce que** les vannes de commande (9-11) sont des vannes tout ou rien et le moyen de commande (12) ouvre chaque vanne de commande pendant une fraction d'un laps de temps prédéterminé, ladite fraction étant déterminée par la demande de chaleur détectée par un capteur de demande de chaleur (16-18) pour chaque pièce (2-4).

6. Procédé selon la revendication 5, **caractérisé en ce que** les vannes de commande (9-11) sont modulées en largeur d'impulsion.

7. Procédé selon la revendication 5 ou 6, **caractérisé en ce que** les vannes de commande sont contrôlées dans un des modes de fonctionnement suivants :
a) toutes les vannes de commande sont ouvertes simultanément une fois pendant un laps de temps prédéterminé,
b) toutes les vannes de commande sont ouvertes les unes après les autres pendant ledit laps de temps,
c) ledit laps de temps est divisé en un nombre de fractions, ledit nombre de fractions correspondant au nombre de vannes de commande, chaque fraction étant attribuée à une vanne de commande spécifique, une vanne de commande étant ouverte au début de sa fraction à condition que la vanne de commande de la fraction précédente soit encore ouverte, ou la vanne de commande étant ouverte pendant la fraction précédente au moment où la vanne de commande de la fraction précédente est fermée.

8. Procédé selon la revendication 7, **caractérisé en ce que** le mode de fonctionnement est choisi en fonction du type de la source de chaleur (5).

9. Procédé selon l'une quelconque des revendications 5 à 8, **caractérisé en ce que** la température de sortie de la source de chaleur (5) est changée en fonction de la demande de chaleur de toutes les pièces (2-4).
